# EUROPEAN PATENT APPLICATION

(11) **EP 1 745 849 A1**
(43) Date of publication of application: **24.01.2007**
(21) Application number: 05106702.3
(22) Date of filing: 21.07.2005
(51) Int. Cl.: B01J 37/30, B01J 21/16

(54) **Process for preparing a metal-containing composition comprising a PH-dependent anion**

(71) Applicant: Albemarle Netherlands B.V., 3818 LE Amersfoort (NL); Akzo Nobel N.V, Intellectual Property (Dept.AIP), 6824 BM Arnhem (NL)
(72) Inventor: O'Connor, Paul, NL-3871 KM, HOEVELAKEN (NL); Stamires, Dennis, Newport Beach, California, 92660 (US); Jones, William, CB2 2NJ, CAMBRIDGE (GB); Brady, Michael, STUDIO CITY, California, 91604 (US)
(74) Representative: Schalkwijk, Pieter Cornelis

(57) **Abstract**

Process involving the steps of (a) adjusting the pH of an aqueous solution comprising a pH-dependent anion to a value at which the anion form to be incorporated into the metal-containing composition is stable, (b) adding a rehydratable calcined anionic clay to this solution and changing the pH of the solution to an optimum value for anionic clay formation, thereby ensuring that the desired anion form is introduced into the anionic clay, and (c) aging the resulting suspension in order to rehydrate the calcined anionic clay.
This process allows for the incorporation into an anionic clay of pH-dependent anions in any form, without compromising on the rate of anionic clay formation.

## Description

The present invention relates to a metal-containing composition from a rehydratable calcined anionic clay.

Compositions comprising divalent and trivalent metals, such as anionic clays (also called hydrotalcite-like materials and layered double hydroxides), are known to be suitable for, e.g., the reduction of SOx and NOx emissions from the regenerator of fluid catalytic cracking (FCC) units.

Anionic clays have a crystal structure consisting of positively charged layers built up of specific combinations of divalent and trivalent metal hydroxides between which there are anions and water molecules. Hydrotalcite is an example of a naturally occurring anionic clay wherein Mg is the divalent metal, Al is the trivalent metal, and carbonate is the predominant anion present. Meixnerite is an anionic clay wherein Mg is the divalent metal, Al is the trivalent metal, and hydroxyl is the predominant anion present.
The anions between the interlayers can be exchanged. One way of exchanging these anions is by calcining the anionic clay to temperatures of up to about 800°C to form a rehydratable calcined anionic clay (also called solid solution), and rehydrating the calcined material in a polar liquid (preferably water) containing the anions to be incorporated between the layers.

In order to make an existing anionic clay more suitable for specific applications, a third metal can be incorporated. Examples of such third metals are Mo, V, and W. Mo and W are desired for, e.g., hydroprocessing applications, while V has advantageous properties for the reduction of SOx emissions from FCC units.
A simple way of introducing such metals into existing anionic clays is by ion-exchange. Compared to impregnation, ion-exchange will result in a more homogeneous distribution of the metal in the clay. However, the amount of metal to be introduced by ion-exchange is limited to the ion-exchange capacity.

In order to maximise the amount of introduced metal atoms, an anion should be chosen that contains a high number of metal atoms per negative charge. For example, ion-exchange with VO₃⁻ introduces one V atom per negative charge, while V₁₀O₂₈⁶⁻ introduces 1.7 V atoms per negative charge.
However, the stability of such anions generally varies with the pH. In other words, they are pH-dependent. For example, vanadate ions are present as VO₃⁻₂₈⁶⁻, V₂O₇⁴⁻, V₃O₉³⁻, V₄O₁₂⁴⁻, V₁₀O or V₁₈O₄₂¹²⁻, depending on the pH of the solution.

US 5,843,862 discloses the introduction of vanadate, tungstate, and molybdate in anionic clays using ion-exchange. The metal is introduced into pre-formed anionic clay by calcining the clay, followed by blending with a solution of a vanadate, tungstate or molybdate salt. Because vanadates, tungstates, and molybdates are pH-dependent anions, an alkalinity control agent is added to bring the pH of the solution to a value at which these anions are stabilised in the monometalate form. The required pH range depends on the desired anion. For instance, for VO₃⁻ the desired pH range is 6 to 8, while HVO₄²⁻ and VO₄³⁻ require pH ranges of 9-13 and 13-14, respectively.
The resulting aqueous mixture is then aged at a temperature of 50-100°C for at least one hour, which results in the formation of an anionic clay with the formula

M²⁺ ₂ₓAl₂₋ₙM³⁺ ₙ(OH)₄ₓ₊₄(J^{v})_{k/v}(A^{q})_{(2-k)/q}·m H₂O

wherein M²⁺ is a divalent metal selected from the group consisting of Mg, Ca, Zn, Ba, and Sr; M³⁺ is a trivalent metal selected from the group consisting of Ce, La, Fe, Cr, V, and Co; J is VO₃, HVO₄, VO₄, V₂O₇, HV₂O₇, V₃O₉, V₄O₁₂, WO₄, or MoO₄; A is selected from the group consisting of CO₃, OH, SO₃, SO₄, Cl, and NO₃; q and v are the net ionic charges associated with J and A, respectively; x is about 1.1 to about 3.5; n is about 0.01 to about 0.4; k is about 0.01 to less than 2; and m is a positive number.

The preferred pH for rehydrating a calcined anionic clay is in the range of 4 to 11, more preferably 3-8, depending on the divalent and trivalent metals present in the calcined anionic clay. For example, the optimum pH for the formation of Mg-Al anionic clays is 8-10; the optimum pH for the formation of Zn-Cr anionic clays is 3.5 to 6.2; the optimum pH for the formation of Ni-Cr anionic clay is 3.5 to 6.8; the optimum pH for the formation of Zn-Cr anionic clay is 4.5-5.0, see A. de Roy et al., Synthesis of Microporous Materials, Vol. 2, p. 108.
Outside the optimum pH ranges anionic clay formation is substantially slower and/or results in the precipitation of other phases, such as hydroxide impurities like Mg(OH)₂, AIOOH, or Zn(OH)₂.
This optimum pH range may conflict with the pH range required for stabilising the anion that is desirably incorporated. For instance, the optimum pH for the formation of Mg-Al anionic clays is 8-10, while V₁₀O₂₈⁶⁻ is stable in the range pH 6-7. Hence, a compromise must often be sought between the rate of anionic clay formation and the form of the anion to be incorporated.

The object of the present invention is to provide a process for preparing a metal-containing composition that allows for the incorporation into an anionic clay of pH-dependent anions in any form, without compromising on the rate of anionic clay formation.

This object is achieved by a process involving the steps of:
i) adjusting the pH of an aqueous solution comprising a pH-dependent anion to a value at which the concentration of the anion form to be incorporated into the metal-containing composition is maximum,
ii) adding a rehydratable calcined anionic clay to this solution and changing the pH of the solution to an optimum value for anionic clay formation, thereby ensuring that the desired anion form is introduced into the anionic clay, and
iii) aging the resulting suspension in order to rehydrate the calcined anionic clay.

Step ii) can be performed in two ways: by first changing the pH and then adding the calcined anionic clay (embodiment 1), or by first adding the calcined anionic clay, and then changing the pH (embodiment 2). In both embodiments it is important to keep the time period between the pH change and the addition of calcined anionic clay, or *vice versa,* short enough to ensure that the desired anion form is incorporated. In both embodiments the pH is either decreased or increased, depending on whether the anion is stable at a pH above or below 9.

According to embodiment 1, the process involves the steps of
a) adjusting the pH of an aqueous solution comprising a pH-dependent anion to a value at which the concentration of the anion form to be incorporated into the metal-containing composition is maximum,
b) changing the pH of the solution by at least two pH units to a value in the range of 4-11 by
   (b1) increasing the pH if the pH of the solution of step a) is below 9, or
   (b2) decreasing the pH if the pH of the solution of step a) is 9 or higher,
c) adding a rehydratable calcined anionic clay to the solution to form a suspension, and
d) aging the suspension in order to rehydrate the calcined anionic clay, thereby forming the metal-containing composition,
wherein the time period between the pH change of step b) and the addition of the rehydratable calcined anionic clay in step c) is such that it does not allow for more than 50% decrease in concentration of the anion form formed in step a).

According to embodiment 2, the process involves the steps of
a) adjusting the pH of an aqueous solution comprising a pH-dependent anion to a value at which the concentration of the anion form to be incorporated into the metal-containing composition is maximum,
b) adding a rehydratable calcined anionic clay to the solution to form a suspension,
c) changing the pH of the solution by at least two pH units to a value in the range of 4-11 by
   (b1) increasing the pH if the pH of the solution of step a) is below 9, or
   (b2) decreasing the pH if the pH of the solution of step a) is 9 or higher, and
d) aging the suspension in order to rehydrate the calcined anionic clay, thereby forming the metal-containing composition,
wherein the time period between the addition of the rehydratable calcined anionic clay in step b) and the pH change of step c) is such that it does not allow for more than 50% decrease in concentration of the anion form formed in step a).

Because this process always allows for rehydration of the calcined anionic clay at the optimum rehydration pH, it also minimises the formation of additional phases, e.g. hydroxide impurities.

### pH-dependent anions

pH-dependent anions are anions which, when dissolved in water, can change in structure and composition upon the pH of the solution changing.

The pH-dependent anion(s) is/are preferably selected from the group consisting of pH-dependent boron-containing anions, pH-dependent bismuth-containing anions, pH-dependent thallium-containing anions, pH-dependent phosphorus-containing anions, pH-dependent silicon-containing anions, pH-dependent chromium-containing anions, pH-dependent vanadium-containing anions, pH-dependent tungsten-containing anions, pH-dependent molybdenum-containing anions, pH-dependent iron-containing anions, pH-dependent niobium-containing anions, pH-dependent tantalum-containing anions, pH-dependent manganese-containing anions, pH-dependent aluminium-containing anions, and pH-dependent gallium-containing anions.

Examples of boron-containing pH-dependent anions are borates such as BO₃²⁻, B(OH)₄⁻, [B₂O(OH)₅]⁻, [B₃O₃(OH)₄]⁻, [B₃O₃(OH)₅]²⁻, and [B₄O₅(OH)₄]²⁻.
Examples of vanadium-containing pH-dependent anions are vanadates such as VO₃⁻, VO₄³⁻, HVO₄²⁻, H₂VO₄⁻, V₂O₇⁴⁻, HV₂O₇³⁻, V₃O₉³⁻, V₄O₁₂⁴⁻, V₁₀O₂₈⁶⁻, HV₁₀O₂₈⁵⁻, H₂V₁₀O₂₈⁴⁻ V₁₈O₄₂¹²⁻, and V-containing heteropolyacids such as V₃W₃O₁₉⁵⁻, and VW₅O₁₉⁴⁻.
Examples of tungsten-containing pH-dependent anions are tungstates such as WO₄²⁻, HW₆O₂₁⁵⁻, W₇O₂₄⁶⁻, W₁₀O₃₃⁴⁻, W₁₂O₄₀⁴⁻, W₁₈O₆₂⁶⁻, W₂₁O₈₆⁸⁻, and W-containing heteropolyacids such as V₃W₃O₁₉⁵⁻, VW₅O₁₉⁴⁻, [SiW₁₁Fe(OH)O₃₉]⁶⁻, NbW₅O₁₉³⁻, and Nb₄W₂O₁₉⁶⁻,
Examples of molybdenum-containing pH-dependent anions are molybdates such as MoO₄⁻, Mo₆O₁₉²⁻, Mo₇O₂₄⁶⁻, and Mo₈O₂₄⁴⁻
Examples of iron-containing pH-dependent anions are Fe(OH)₄⁻, Fe(OH)₆⁴⁻, Fe(OH)₆³⁻, and [SiW₁₁Fe(OH)O₃₉]⁶⁻,
Examples of niobium-containing pH-dependent anions are niobates such as NbO₄³⁻, Nb₄O₁₆¹²⁻, Nb₆O₁₉⁸⁻, HNb₆O₁₉⁸⁻, H₂Nb₆O₁₉⁶⁻, Nb₁₀O₂₈⁶⁻, [NbO₂(OH)₄]³⁻, and Nb-containing heteropolyacids like NbW₅O₁₉³⁻, and Nb₄W₂O₁₉⁶⁻.
Examples of tantalum-containing pH-dependent anions are tantalates such as TaO₄³⁻, Ta₆O₁₉⁸⁻, and HTa₆O₁₉⁷⁻.
Examples of aluminium-containing pH-dependent anions are AlW₁₁O₃₉ⁿ⁻, and AIV^{IV}₂V^{V}₁₂O₄₀⁹⁻.
For more information and examples of pH-dependent anions reference may be had to M.T. Pope, *Heteropoly and Isopoly Oxometalates,* Spinger-Verlag Berlin, Heidelberg 1983.

Table I below lists several anion forms together with the pH ranges in which their concentration is maximum. The pH at which the concentration of a particular anion form is maximum can be determined by measuring the concentration of the anion form as a function of the pH using techniques sensitive to the structure of the anion, such as UV/Vis, Raman, IR, or NMR.

**Table I**

| Anion | pH range |
|---|---|
| B(OH)₄⁻ | > 10.5 |
| [B₃O₃(OH)₄]⁻ | 7.5-9.5 |
| [B₃O₃(OH)₅]²⁻ | 8.5-10 |
| [B₄O₅(OH)₄]²⁻ | 8.5-9.5 |
| V₂O₇⁴⁻ | 10-13 |
| HV₂O₇³⁻ | 8-10 |
| V₃O₉³⁻ | 6.5-8 |
| V₄O₁₂⁴⁻ | 6.5-8 |
| V₁₀O₂₈⁶⁻ | 6-7 |
| V₃W₃O₁₉⁵⁻ | 2-3 |
| VW₅O₁₉⁴⁻ | 3-5 |
| NbW₅O₁₉³⁻ | 1.5-5 |
| Nb₄W₂O₁₉⁶⁻ | >8.5 |

### Rehydratable calcined anionic clay

The rehydratable calcined anionic clay to be used in the process according to the invention is preferably built up from (i) a divalent metal selected from the group consisting of magnesium, zinc, nickel, copper, iron, cobalt, manganese, calcium, barium, strontium, and combinations thereof, and (ii) a trivalent metal selected from the group consisting of aluminium, gallium, iron, chromium, vanadium, cobalt, manganese, nickel, and combinations thereof.

The rehydratable calcined anionic clay (solid solution) can be obtained by calcining an existing anionic clay at temperatures up to about 800°C. The formation of non-rehydratable spinel-type species must be minimised. The maximum temperature allowed for forming solid solutions and preventing spinel formation depends on the type of anionic clay.
Preferably, the calcined anionic clay contains 50-100% of rehydratable oxide, more preferably 70-100% of rehydratable calcined anionic clay.

Preferred calcination temperatures are 200-800°C, more preferably 300-700°C, and most preferably 350-600°C. Calcination is preferably conducted for 0.25-25 hours, preferably 1-8 hours, and most preferably 2-6 hours.

The rehydratable calcined anionic clay may be added to the solution in the form of particles containing 100% rehydratable calcined anionic clay. Conversely, it may be added in the form of a composition comprising additional compounds. Examples of additional compounds include zeolites (e.g. zeolite Y, USY, RE-Y, RE-USY, beta, ZSM-5) and binder or matrix materials (e.g. silica, alumina, silica-alumina, kaolin, meta-kaolin, bentonite). The latter allows for the ion-exchange of existing catalyst or catalyst additive compositions.

### The process

### Step a)

In step a), the pH of an aqueous solution comprising a pH-dependent anion is adjusted to a value at which the concentration of the anion form to be incorporated into the metal-containing composition is maximum. Suitable pH values for different anions are listed above in Table I. The anion is preferably present in the aqueous solution in concentrations of 0.01-1 M, more preferably 0.05-0.5 M, and most preferably 0.05-0.1 M.

In addition to the pH-dependent anion(s), the solution used in the process according to the invention may contain other anions, i.e. anions that are not pH-dependent.
These anions may also end up in the resulting metal-containing composition, e.g. as (additional) interlayer anions. Examples of such anions are NO₃⁻, NO₂⁻, CO₃²⁻, HCO₃⁻, SO₄²⁻, SO₃NH₂, SCN⁻, S₂O₆²⁻, SeO₄⁻, F, Cl⁻, Br⁻, I⁻, ClO₃⁻, ClO₄⁻, BrO₃⁻, and IO₃⁻, silicate, aluminate and metasilicate, and organic anions such as acetate, oxalate, and formate, long-chain carboxylates (e.g. sebacate, caprate, and caprylate (CPL)), alkylsulfates (e.g. dodecyl sulfate (DS) and dodecylbenzene sulfate), stearate, benzoate, phthalocyanine tetrasulfonate, and polymeric anions such as polystyrene sulfonate, polyimides, vinyl-benzoates, and vinyldiacrylates.
The advantage of the presence of organic anions is that upon heating of the metal-containing composition these anions are decomposed, thereby creating porosity. Furthermore, these organic anions may introduce hydrophilic and/or hydrophobic characteristics into the metal-containing composition, which can be advantageous for catalytic purposes, e.g. when individual catalyst components are brought together to form a single catalyst particle. The organic anions are also useful for pillaring, delamination, and exfoliation of the metal-containing composition, which may lead to the formation of nanocomposites comprising the metal-containing composition, optionally in a matrix of organic polymer, resins, plastics, rubbers, pigments, paints, dyes, coatings.

### Steps b) and c)

According to embodiment 1, the pH of the solution prepared in step a) is changed by at least two pH units to a value in the range of 4-11, the desired value depending on the type of anionic clay to be formed. As explained above, the optimum pH for anionic clay formation depends on the divalent and trivalent metals constituting the anionic clay.
If the solution of step a) has a pH below 9 - in other words: if the concentration of the anion form desired to be incorporated into the metal-containing composition is maximum at a pH below 9 - then the pH is increased by at least two pH units in step b).
If the solution of step a) has a pH of 9 or higher - in other words: if the concentration of the anion form desired to be incorporated into the metal-containing composition is maximum at a pH of 9 or higher - then the pH is decreased by at least two pH units in step b).
Within a short time period after this pH change, the rehydratable calcined anionic clay is added (step c). The time period between the pH change and the addition of the calcined anionic clay must be short enough to prevent more than 50% conversion of the anion form obtained in step a) to another form.

Preferably, not more than 30%, more preferably not more than 20%, and most preferably not more than 10% of the anion form obtained in step a) is converted to another form before the addition of the calcined anionic clay.
This conversion of the anion form is calculated from the decrease in concentration of said anion form, which can be measured with any technique sensitive to the structure of the anion, such as UV/Vis, Raman, IR, or NMR. The intensity of adsorption or resonance measured with these techniques is proportional to the amount of the particular anion in the solution.

According to embodiment 2, rehydratable calcined anionic clay is added in step b). Within a short time period after this addition of calcined anionic clay, the pH is changed by at least two pH units to a value in the range of 4-11.
The time period between this addition and the pH change must be short enough to prevent more than 50% conversion of the anion form obtained in step a) to another form. Preferably, not more than 30%, more preferably not more than 20%, and most preferably not more than 10% of the anion form obtained in step a) is converted to another form before the addition of the calcined anionic clay. This conversion of the anion form is calculated and measured as described above for embodiment 1.
As explained above, the optimum pH for anionic clay formation depends on the divalent and trivalent metals constituting the anionic clay. If the solution of step a) has a pH below 9 - in other words: if the concentration of the anion form desired to be incorporated into the metal-containing composition is maximum at a pH below 9 - then the pH is increased by at least two pH units in step c). If the solution of step a) has a pH of 9 or higher - in other words: if the concentration of the anion form desired to be incorporated into the metal-containing composition is maximum at a pH of 9 or higher - then the pH is decreased by at least two pH units in step c).

Prior to its addition to the solution according to both embodiments 1 and 2, the calcined anionic clay may have been mechanically treated (e.g. milled) in order to decrease its particle size.

### Step d)

After changing the pH and adding the rehydratable calcined anionic clay, the resulting suspension is aged in order to allow for rehydration of the calcined anionic clay and, consequently, the incorporation of the desired anion. This aging is generally performed at temperatures of 25 to 350°C, more preferably 25 to 200°C, most preferably 50 to 150°C. This aging is generally performed for about 20 minutes to 20 hours, preferably 30 minutes to 8 hours, more preferably 1-4 hours.
During this aging, the suspension can be mechanically treated by using high-shear mixers, colloid mixers, ball mills, kneaders, ultrasound, etc.

Step d) can be performed batch-wise or continuously, optionally in a continuous multi-step operation according to WO 03/078055. For example, the aging suspension is prepared in a feed preparation vessel, whereupon it is continuously pumped through two or more conversion vessels. Additives, acids, or bases may be added to the suspension in any of the conversion vessels if so desired. Each of the vessels can be adjusted to its own desirable temperature.

The resulting metal-containing composition may be an anionic clay having the desired anion - in the form obtained in step a) - in the interlayer, or having the metal constituting the anion partly incorporated into the clay layers.

The resulting metal-containing composition may additionally comprise additives - in amounts of 0.1 to 50 wt%, preferably 1-20 wt%, and more preferably 1-10 wt% (based on the total composition and calculated as oxides) - such as compounds containing an element selected from the group of alkaline earth metals (for instance Mg, Ca, and Ba), transition metals (for example Mn, Fe, Co, Ti, Zr, Cu, Ni, Zn, Mo, W, V, Sn, Nb), actinides, rare earth metals such as La and Ce, noble metals such as Pt and Pd, silicon, gallium, boron, titanium, phosphorus, and mixtures thereof. The additive preferably is an oxide, hydroxide, carbonate, or hydroxycarbonate of the desired metal.
The additive can be introduced into the composition by starting with an additive-containing rehydratable calcined anionic clay, by adding the additive to the solution before or during step d), or by impregnating the resulting metal-containing composition with the additive.

### Use of the metal-containing composition

If so desired, the metal-containing composition prepared according to the process of the present invention may be mixed with conventional catalyst or sorbent ingredients such as silica, alumina, aluminosilicates, zirconia, titania, boria, (modified) clays such as kaolin, acid-leached kaolin, dealuminated kaolin, smectites, and bentonite, (modified or doped) aluminium phosphates, zeolites (e.g. zeolite X, Y, REY, USY, RE-USY, or ZSM-5, zeolite beta, silicalites), phosphates (e.g. meta- or pyro-phosphates), pore regulating agents (e.g. sugars, surfactants, polymers), binders, fillers, and combinations thereof.

The metal-containing composition, optionally mixed with one or more of the above conventional catalyst components, can be shaped to form shaped bodies. Suitable shaping methods include spray-drying, pelletising, extrusion (optionally combined with kneading), beading, or any other conventional shaping method used in the catalyst and absorbent fields or combinations thereof.

The metal-containing composition prepared by the process according to the invention is very suitable for use as sulfur oxide sorbent material. Hence, the material can be incorporated for this purpose into FCC catalysts or FCC catalyst additives. Additionally, the metal-containing composition can be used for the adsorption of sulfur oxide emission from other sources like power plants.

As sulfur oxides sorbent materials generally are good nitrogen oxide sorbent materials, the additive-containing anionic clay will likewise be suitable as nitrogen oxide sorbent material in, e.g., FCC catalysts, FCC catalyst additives, etc.
Furthermore, they can be used for other purposes, such as the removal of gases like HCN, ammonia, Cl₂, and HCl from steel mills, power plants, and cement plants, for reduction of the sulphur and/or nitrogen content in fuels like gasoline and diesel, as additives for the conversion of CO to CO₂, and in or as catalyst compositions for Fischer-Tropsch synthesis, hydroprocessing (hydrodesulfurisation, hydrodenitrogenation, demetallisation), hydrocracking, hydrogenation, dehydrogenation, alkylation, isomerisation, Friedel Crafts processes, ammonia synthesis, etc.
If so desired, the metal-containing composition may be treated with organic agents, thereby making the surface of the clay - which generally is hydrophilic in nature - more hydrophobic. This allows the additive-containing anionic clay to disperse more easily in organic media.

When applied as nanocomposites (i.e. particles with a diameter of less than about 500 nm), the metal-containing composition can suitably be used in plastics, resins, rubber, and polymers. Nanocomposites with a hydrophobic surface, for instance obtained by treatment with an organic agent, are especially suited for this purpose.

## Claims

1. Process for the preparation of a metal-containing composition comprising a pH-dependent anion, said process comprising the steps of
a) adjusting the pH of an aqueous solution comprising a pH-dependent anion to a value at which the concentration of the anion form to be incorporated into the metal-containing composition is maximum,
b) changing the pH of the solution by at least two pH units to a value in the range of 4-11 by
(b1) increasing the pH if the pH of the solution of step a) is below 9, or
(b2) decreasing the pH if the pH of the solution of step a) is 9 or higher,
c) adding a rehydratable calcined anionic clay to the solution to form a suspension, and
d) aging the suspension in order to rehydrate the calcined anionic clay, thereby forming the metal-containing composition,
wherein the time period between the pH change of step b) and the addition of the rehydratable calcined anionic clay in step c) is such that it does not allow for more than 50% decrease in concentration of the anion form formed in step a).

2. Process according to claim 1 wherein the time period between the pH change of step b) and the addition of the rehydratable calcined anionic clay in step c) is such that it does not allow for more than 30% decrease in concentration of the anion form formed in step a).

3. Process according to claim 2 wherein the time period between the pH change of step b) and the addition of the rehydratable calcined anionic clay in step c) is such that it does not allow for more than 20% decrease in concentration of the anion form formed in step a).

4. Process according to claim 3 wherein the time period between the pH change of step b) and the addition of the rehydratable calcined anionic clay in step c) is such that it does not allow for more than 10% decrease in concentration of the anion form formed in step a).

5. Process for the preparation of a metal-containing composition comprising a pH-dependent anion, said process comprising the steps of
a) adjusting the pH of an aqueous solution comprising a pH-dependent anion to a value at which the concentration of the anion form to be incorporated into the metal-containing composition is maximum,
b) adding a rehydratable calcined anionic clay to the solution to form a suspension,
c) changing the pH of the solution by at least two pH units to a value in the range of 4-11 by
(b1) increasing the pH if the pH of the solution of step a) is below 9, or
(b2) decreasing the pH if the pH of the solution of step a) is 9 or higher, and
d) aging the suspension in order to rehydrate the calcined anionic clay, thereby forming the metal-containing composition,
wherein the time period between the addition of the rehydratable calcined anionic clay in step b) and the pH change of step c) is such that it does not allow for more than 50% decrease in concentration of the anion form formed in step a).

6. Process according to claim 5 wherein the time period between the addition of the rehydratable calcined anionic clay in step b) and the pH change of step c) is such that it does not allow for more than 30% decrease in concentration of the anion form formed in step a).

7. Process according to claim 6 wherein the time period between the addition of the rehydratable calcined anionic clay in step b) and the pH change of step c) is such that it does not allow for more than 20% decrease in concentration of the anion form formed in step a).

8. Process according to claim 7 wherein the time period between the addition of the rehydratable calcined anionic clay in step b) and the pH change of step c) is such that it does not allow for more than 10% decrease in concentration of the anion form formed in step a).

9. Process according to any one of the preceding claims wherein the pH-dependent anion is selected from the group consisting of pH-dependent B-containing anions, pH-dependent Bi-containing anions, pH-dependent Tl-containing anions, pH-dependent P-containing anions, pH-dependent Si-containing anions, pH-dependent Cr-containing anions, pH-dependent V-containing anions, pH-dependent W-containing anions, pH-dependent Mo-containing anions, pH-dependent Fe-containing anions, pH-dependent Nb-containing anions, pH-dependent Ta-containing anions, pH-dependent Mn-containing anions, pH-dependent Al-containing anions, and pH-dependent Ga-containing anions.

10. Process according to any one of the preceding claims wherein the aqueous solution additionally comprises anions that are not pH-dependent.

11. Process according to any one of the preceding claims followed by shaping the metal-containing composition to from shaped bodies.

12. Process according to any one of the preceding claims followed by calcining the metal-containing composition.
